# EUROPEAN PATENT SPECIFICATION

(11) **EP 1 344 139 B1**
(45) Date of publication and mention of the grant of the patent: **08.02.2006**
(21) Application number: 01983044.7
(22) Date of filing: 13.11.2001
(51) Int. Cl.: G06F 1/32, G06F 13/36

(54) **A DIGITAL BUS SYSTEM**
DIGITALES BUSSYSTEM
SYSTEME DE BUS NUMERIQUE

(30) Priority: 22.12.2000 SE 0004832
(43) Date of publication of application: 17.09.2003
(73) Proprietor: TELEFONAKTIEBOLAGET LM ERICSSON (publ), 164 83 Stockholm (SE)
(72) Inventor: MÖLLER, Karl-Magnus, S-413 24 Göteborg (SE)
(74) Representative: Kühn, Friedrich Heinrich
(86) International application number: PCT/SE2001/002514
(87) International publication number: WO 2002/052421

(56) References cited:
- EP-A2- 0 237 839
- EP-A2- 0 867 814
- EP-A2- 1 037 150
- US-A- 4 467 418

## Description

### FIELD OF INVENTION

The present invention relates to the field of digital bus systems, and more particularly to that part of this field in which the bus system includes means for generating a clock signal that indicates the rate at which data is sent over a data bus.

### DESCRIPTION OF THE BACKGROUND ART

The document EP-A2-0 867 814 (REVILLA) 30 September 1998, discloses a bus system comprising a data bus, a plurality of transmitter units that are connected to the data bus, a receiver that is connected to the data bus, a clock signal which indicates the rate at which data is sent on the data bus and means for distributing the clock signal to the transmitter units.

In this technical context, there is often found the need to send data between units in a technical system. A well-known method of achieving an exchange of data between the units is to use a digital bus system. The digital bus system will normally include a data bus that has one or more data lines. A plurality of transmitter units and one or more receiver units are normally connected to the data bus. In order to prevent "collisions" on the data bus between different transmitter units, the digital bus system will often include an arbitrator, which is adapted to determine and control which of the transmitter units may have access to the data bus. Alternatively, the transmitter units may include means for detecting collisions on the data bus. When one of the transmitter units has detected a collision, the transmitter unit will normally wait for a randomly chosen time period before making a fresh attempt to send data. The digital bus system normally includes a clock, which generates a clock signal that indicates the rate at which data shall be sent on the data bus. The frequency of the clock signal is constant and normally calculated with regard to a predetermined maximum traffic load in the digital bus system.

Although the digital bus system has many advantages, it also has some drawbacks. One drawback is that the digital bus system is highly power consuming. This is particularly true when the bus system includes a large number of transmitters, which is not unusual in many technical fields, such as data communications and telecommunications, for instance.

### SUMMARY OF THE INVENTION

The present invention mainly addresses the problem of reducing present-day power consumption of a digital bus system.

Briefly speaking, the problem is solved with a bus system that includes a data bus to which a plurality of transmitter units and at least one receiver is connected. The bus system also includes means for generating a clock signal that controls the rate at which data is sent on the data bus. It is proposed in accordance with the invention that the clock signal is generated so that the rate at which data is transmitted on the data bus will vary. Since the data rate varies, the transmitter units and the receiver will not always operate at a high frequency that is adapted for a maximum traffic load in the bus system, which results in lower average power consumption of the transmitter units and the receiver than would otherwise be the case.

The present invention is thus intended mainly to reduce the power consumption in a digital bus system in relation to known systems.

More specifically, the problem formulated above is solved as follows. The bus system includes means for determining at least one parameter that provides an indication of how many of the transmitter units need to send data on the data bus at that particular moment in time. The means that generate the clock signal are adapted to generate said signal with regard to the established parameter in accordance with a predetermined pattern. In this respect, the clock signal is generated so that the fewer transmitter units that need to send data, the lower the data rate on the data bus. Because the clock signal is generated such as to vary the data rate, the mean power in the transmitter units and the receiver will decrease. Moreover, this lower power consumption is achieved without waiting times for the transmitter units to transmit data being appreciably affected, since the clock signal is generated so that the data rate will be adapted with respect to the number of transmitter units that need to transmit data.

Thus, one significant advantage afforded by the invention is that power consumption decreases. This is, of course, beneficial in many technical fields, and in particular in applications where a large number of transmitter units are connected to the data bus, or where the need to save power is of particular importance. The inventive bus system is therefore highly beneficial in data applications and telecommunications applications, for instance in telephone exchanges, switching centres, radio base stations or routers (a form of data switch). The inventive bus system can also be used to advantage in mobile equipment in the absence of an external power supply.

The invention will now be described in more detail with reference to preferred embodiments thereof and also with reference to the accompanying drawings.

### BRIEF DESCRIPTION OF THE DRAWINGS

Figure 1 is a block diagram of a digital bus system, by way of an example of the present invention.
Figure 2 is a time diagram, which illustrates signals in the digital bus system.
Figure 3 is a constitutional diagram, which illustrates round-robin technology.
Figure 4 is a diagram that illustrates the used of a FIFO list in the digital bus system.
Figure 5 is a block diagram, which illustrates one embodiment of an arbitrator.
Figure 6 is a block diagram that illustrates a further embodiment of an arbitrator.
Figure 7 is a block diagram illustrating another embodiment of an arbitrator.
Figure 8 is a block diagram illustrating a further embodiment of an arbitrator.
Figure 9 is another block diagram, which illustrates an inventive digital bus system by way of example.
Figure 10 is a block diagram illustrating one embodiment of a clock unit.
Figure 11 is a block diagram illustrating another embodiment of a clock unit.

### DESCRIPTION OF PREFERRED EMBODIMENTS

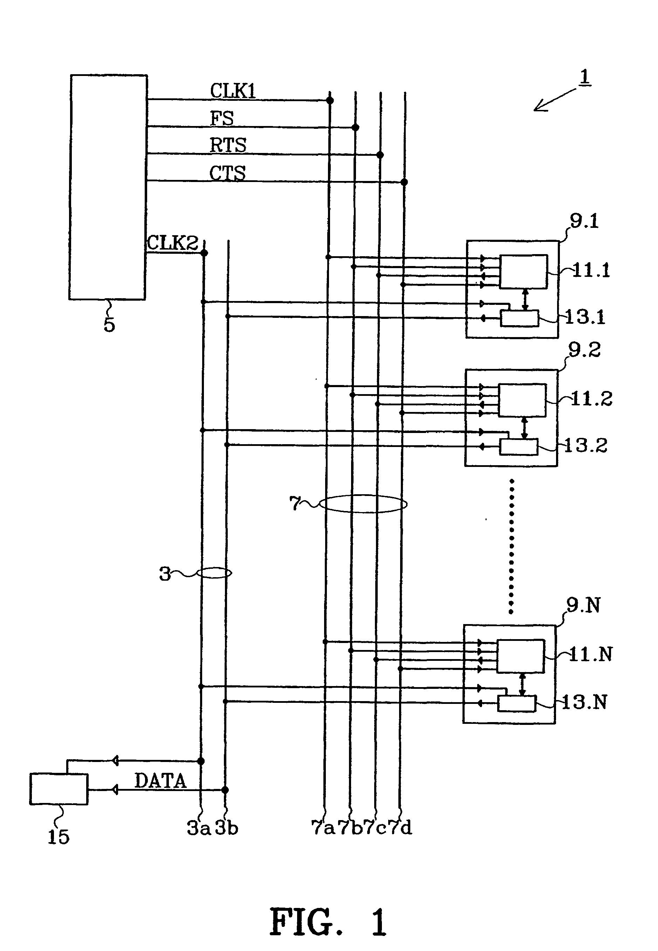

Figure 1 is a block diagram illustrating an exemplifying embodiment of an inventive digital bus system 1.

The bus system 1 includes a data bus 3 having a clock signal line 3a and a data line 3b. Alternatively, the data bus 3 may include one or more further data lines. The bus system 1 also includes an arbitrator 5, which also has clock functions that are described in more detail further on. The bus system 1 includes a number (N) of transmitter units 9.1-9.N connected to the data bus 3. The system also includes a receiver 15 connected to the data bus 3. Alternatively, one or more further receiver are connected to the bus 3.

The main function of the arbitrator 5 is to control the transmitter units 9.1-9.N so as to avoid collisions on the data bus 3, in other words to avoid two or more transmitters 9.1-9.N from attempting to transmit on the data bus 3 simultaneously. The bus system 1 includes an arbitrator bus 7 which links the arbitrator 5 to arbitrator slaves 11.1-11.N in the transmitter units 9.1-9.N. In the case of the Figure 1 embodiment, the arbitrator bus 7 includes four signal lines 7a-7d to which the arbitrator 5 and the arbitrator slaves 11.1-11.N are connected. The arbitrator 5 is adapted to generate a first clock signal CLK1 and a frame synchronising signal FS, which are laid out on the signal line 7a and 7b respectively. The first clock signal CLK1 and the frame synchronising signal FS synchronise communication between the arbitrator 5 and the arbitrator slaves 11.1-11.N. Each of the transmitter units 9.1-9.N includes a transmitter 13.1-13.N and each of the transmitters 13.1-13.N is connected to the data bus 3 and to the corresponding arbitrator slave 11.1-11.N. When one of the transmitters 13.1-13.N, for instance the transmitter 13.1, needs to send data over the data bus 3, the transmitter 13.1 informs the corresponding arbitrator slave 11.1 to this effect. The arbitrator slaves 11.1-11.N are adapted to generate an RTS signal (Request To Send), which is laid out on the signal line 7c in the example shown in Figure 1. The arbitrator 5 is connected to the signal line 7c and adapted to receive the RTS signal, which includes information indicating which of the transmitter units 9.1-9.N has requested to send data over the data bus 3. The arbitrator 5 is adapted to evaluate the RTS signal and to generate a CTS signal (Clear To Send), which is laid out on the signal line 7d in the example shown in Figure 1. The arbitrator slaves 11.1-11.N are connected to the signal line 7d and adapted to receive the CTS signal, which controls which of the requesting transmitter units 9.1-9.N may send data over the data bus 3.

The arbitrator 5 is also adapted to generate a second clock signal CLK2, which is laid out on the clock signal line 3a of the data bus 3. The receiver 15 and the transmitters 13.1-13.N are connected to the signal line 3a and thus receive the second clock signal CLK2, which indicates the rate at which data is sent over the data bus 3. In this respect, the transmitters 13.1-13.N are adapted to synchronise their data transmissions over the data bus 3 in accordance with the data rate indicated by the received second clock signal CLK2, and the receiver 15 is correspondingly adapted to synchronise the reception of data in accordance with the second clock signal CLK2.

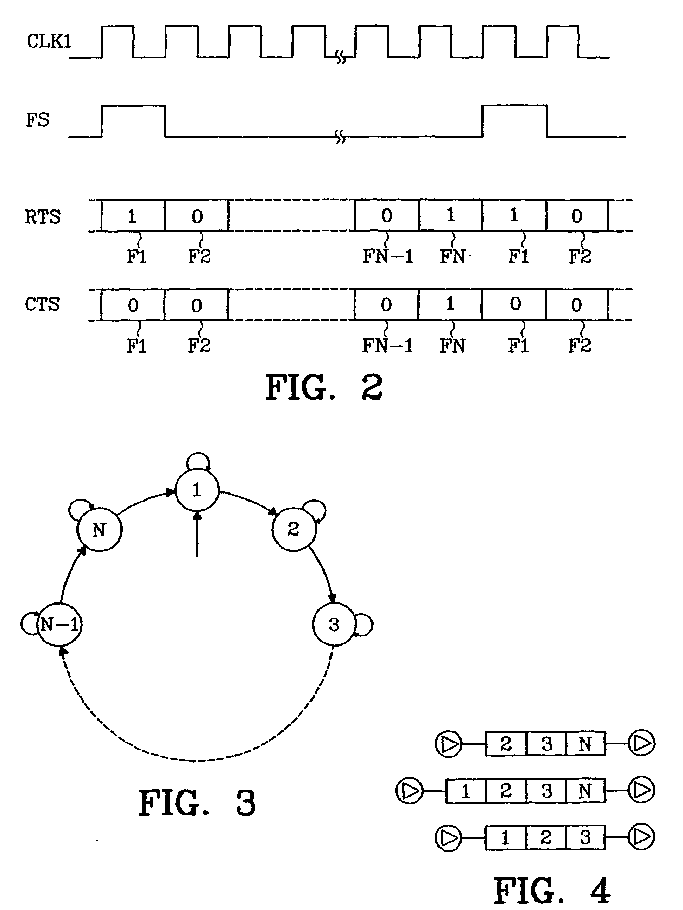

Figure 2 shows four time diagrams that illustrate respectively the first clock signal CLK1, the frame synchronising signal FS, the RTS signal and the CTS signal.

The first clock signal CLK1 is a standard clock signal in the form of a pulse train of rectangular pulses. The first clock signal CLK1 has a predetermined frequency. The second clock signal CLK2 resembles the first clock signal CLK1 but does not necessarily have the same frequency as the first clock signal CLK1. The RTS signal has a frame structure in which a sequence of N number of frames F1-FN is constantly repeated. Each of the frames F1-FN is associated with one of the transmitter units 9.1-9.N. Thus, the first frame F1 is associated with the first transmitter unit 9.1, the second frame F2 is associated with the second transmitter unit 9.2, and so on. The frames F1-FN in the RTS signal are synchronised with the first clock signal CLK1, and the time extension of the frames F1-FN corresponds to a time period of the first clock signal CLK1. The frame synchronising signal FS is illustrated in the second time diagram of Figure 2. The frame synchronising signal FS is a pulse train of rectangular pulses that are synchronised with the first clock signal CLK1 and recur with a time period corresponding to N periods of the first clock signal CLK1. The rectangular pulses of the frame synchronising signal FS indicate where the first frame F1 in each frame sequence commences. In the case of the Figure 2 example, the beginning of the frame F1 is indicated by a positive edge of the rectangular pulse. Each of the frames F1-FN of the RTS signal includes a binary information bit (0 or 1), which indicates whether or not the associated transmitter units 9.1-9.N request permission to send data from the data bus 3. If the information bit in one of the frames, for instance the frame F1, is one (1), the corresponding transmitter unit 9.1 requests permission to send data over the data bus 3. In the Figure 2 example, the transmitter units 9.1 and 9.N thus request permission to send data, while remaining transmitter units 9.2-9.N-1 do not request such permission at that particular time. The CTS signal is illustrated in the last diagram of Figure 2. The CTS signal has a frame structure that corresponds to the frame structure of the RTS signal. Each of the frames F1-FN in the CTS signal is associated with one of the transmitter units 9.1-9.N. Thus, the first frame F1 of the CTS signal is associated with the first transmitter unit 9.1, the second frame F2 of the CTS signal is associated with the second transmitter unit 9.2, and so on. The CTS signal is synchronised to the first clock signal CLK1, and the frame synchronising signal FS indicates when the first frame F1 in the CTS signal is sent, in the same way as for the RTS signal. Each of the frames F1-FN in the CTS signal includes an information bit (0 or 1) that indicates which of the requesting transmitter units 9.1-9.N may send data on the data bus 3 at that moment in time. In the Figure 2 example, it is the transmitter unit N that may send data on the data bus 3, which is indicated by virtue of the information bit in the frame FN of the CTS signal being a one (1).

Naturally, there is an almost inexhaustible number of ways in which the arbitrator 5 may be designed to determine the order in which the requesting transmitter units 9.1-9.N shall be allowed to send data over the data bus 3. Figures 3 and 4 illustrate two of the most usual ways of deciding the order in which the requesting transmitter units may be allowed to send data over the data bus 3.

Figure 3 is a constitutional diagram that illustrates so-called round-robin technology. It is determined initially whether or not the first transmitter unit 9.1 requests permission to send data. If the first transmitter unit requests permission to send data, said first unit 9.1 is permitted to send data until it no longer requests permission to send data. When the first transmitter unit 9.1 does not request permission to send data, it is determined whether or not the second transmitter unit 9.2 requests permission to send data. If such is so, the second transmitter unit 9.2 is permitted to send data until said second transmitter unit 9.2 no longer requests permission to send data. The procedure is repeated in the same way for all of the remaining transmitter units 9.3-9.N, and then begins again from the first transmitter unit 9.1.

Figure 4 is a block diagram that illustrates how a FIFO list (First In First Out) can be used to organise the order in which requesting transmitter units shall be given access to the data bus 3. At the top of the FIFO list in Figure 4, three transmitter units 9.N, 9.3 and 9.2 request permission to send data over the data bus 3. The transmitter unit 9.N is first in the FIFO list and is thus given permission to send data over the data bus 3. Later, the transmitter unit 9.1 also requests permission to send data and the transmitter unit 9.1 is then placed last in the FIFO list. When the transmitter unit 9.N has completed its transmission and therefore no longer requests permission to transmit data, the transmitter unit 9.N is duly removed from the FIFO list. The transmitter unit 9.3 is now first in the FIFO list and may therefore send data over the data bus 3. Thus, in the case of the FIFO list, the requesting transmitter units 9.N, 9.3, 9.2 and 9.1 send data over the data bus 3 in the order in which the transmitter units 9.N, 9.3, 9.2 and 9.1 have requested permission to send data.

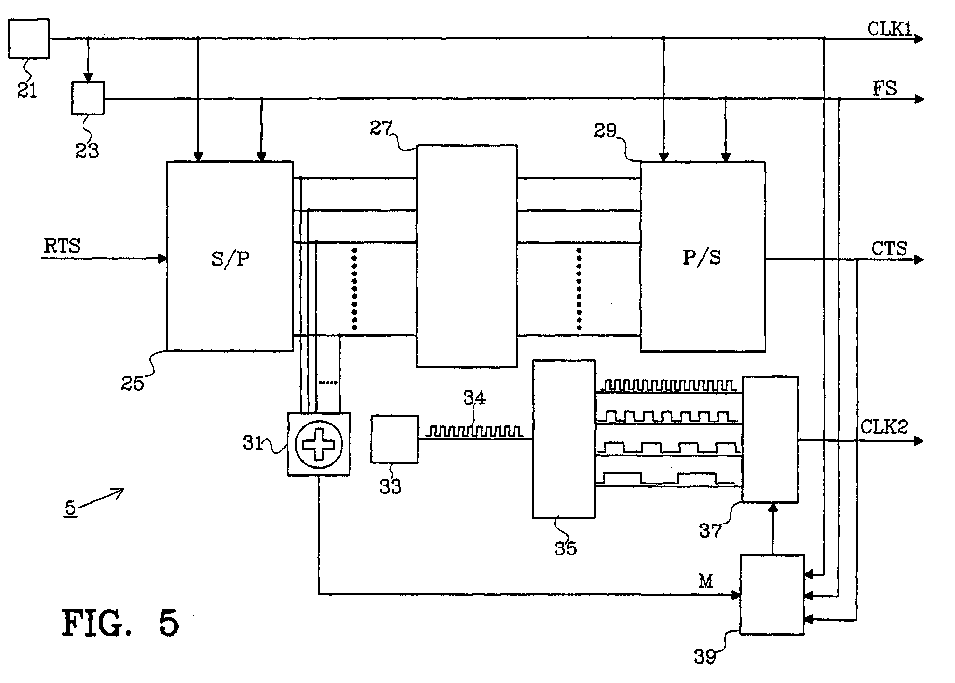

Figure 5 is a block diagram illustrating an exemplifying embodiment of the arbitrator 5. The arbitrator 5 includes a clock signal generator 21 which is adapted to generate the first clock signal CLK1. A signal generator 23 is adapted to receive the first clock signal CLK1 and to generate the frame synchronising signal FS in response to the first clock signal CLK1. The arbitrator 5 includes an S/P converter 25 (Series-to-Parallel converter), which is adapted to receive the RTS signal. The S/P converter 25 is adapted to receive the serially incoming frames F1-FN of the RTS signal and to lay-out the frames F1-FN in parallel on a corresponding number (N) outputs. The S/P converter 25 is adapted to receive the first clock signal CLK1 and the frame synchronising signal FS, which are used by the S/P converter 25 to synchronise correctly the receipt of the frames F1-FN of the RTS signal. A line or queue manager 27 is connected to the outputs of the S/P converter 25 and thus receives the frames F1-FN of the RTS signal in parallel. The line manager 27 is adapted to decide the order in which the requesting transmitter units may send data over the data bus 3, this decision being made in relation to the received frames F1-FN. For example, the line manager 27 may be adapted to utilise the round-robin technique, a FIFO list, or some other system for determining the order in which the requesting transmitter units may send data. The line manager 27 is also adapted to generate the CTS signal frames F1-FN, which, as is known, indicate which of the transmitter units 9.1-9.N may send data over the data bus 3 at that moment in time. The line manager 27 is adapted to lay-out the CTS signal frames F1-FN in parallel on a corresponding number (N) of line manager outputs. A P/S converter 29 (Parallel-to-Serial converter) is connected to the outputs of the line manager 27. The P/S converter 29 is therewith adapted to receive the frames F1-FN of the CTS signal in parallel. The P/S converter 29 is also adapted to generate the CTS signal, by laying out the received frames F1-FN on an output in series. The P/S converter 29 is adapted to receive the first clock signal CLK1 and the frame synchronising signal FS, which are used by the P/S converter 29 to correctly synchronise the frames F1-FN in the CTS signal.

The arbitrator 5 in Figure 5 also includes means for generating the second clock signal CLK2. The second clock signal CLK2 is generated while taking into account the number of transmitter units 9.1-9.N that request permission to send data over the data bus 3. The second clock signal frequency, which controls the rate at which data is sent over the data bus 3, decreases when a smaller number of transmitter units 9.1-9.N request permission to send data over the data bus 3. This means that the transmitter units 9.1-9.N and the receiver 15 do not always operate at a high frequency adapted for a predetermined maximum traffic load in the digital bus system 1, which, in turn, results in an average lower power consumption in the transmitter units 9.1-9.N and the receiver 15. This lower power consumption is also achieved without appreciably affecting transmitter unit waiting times in sending data over the data bus 3. This is because the frequency of the second clock signal CLK2 is adapted in relation to the number of transmitter units 9.1-9.N that request permission to send data on the data bus 3.

The arbitrator 5 in Figure 5 includes a signal generator 33, which is adapted to generate a reference signal 34 in the form of a pulse train of rectangular pulses. The reference signal 34 has a predetermined frequency. A binary counter 35 is connected to the signal generator 33 and adapted to receive the reference signal 34. The binary counter 35 is adapted to count the rectangular pulses of the reference signal 34 and to state the number of rectangular pulses counted binarily with a predetermined number of bits. The binary counter 35 of the Figure 5 embodiment includes four (4) bits, although it may alternatively include a different number of bits, ranging from two bits and upwards. The first bit (the single digit bit) varies with the same frequency as the reference signal 34. The second bit (the two digit bit) varies with a frequency corresponding to half the frequency of the reference signal 34. The third bit (the four digit bit) varies with a frequency corresponding to a fourth of the reference signal frequency. The fourth bit (the eight digit bit) varies with a frequency that corresponds to an eighth of the reference signal frequency. A controllable selector 37 is connected to the binary counter 35 and functions to receive the four bits from said binary counter 35. The selector 37 is adapted to enable one of the bits received to be selected and applied to an output of the selector 37. In this case, the bit selected in this manner constitutes the second clock signal CLK2. A control circuit 39 is connected to the selector 37 and functions to control which of the bits is selected by the selector 37. The arbitrator 5 in Figure 5 also includes an adder 31 connected to the outputs of the S/P converter 25. The adder 31 functions to add together the information bits in the RTS signal frames F1-FN, thereby obtaining a sum M which denotes the number of transmitter units 9.1-9.N that request permission to send data over the data bus 3 at that particular moment in time. The control circuit 39 is connected to the adder 31 and functions to receive from the adder 31 information relating to the sum M. The control circuit 39 is designed to control the selector 37 in accordance with the sum M, in other words in accordance with the number of requesting transmission units. In this respect, the control circuit 39 is adapted to compare the sum M with a number of stored threshold values that denote the values of the sum M for which the different bits from the binary counter 35 shall be selected. In a concrete example, the number of transmitter units 9.1-9.N is 14 and the frequency of the reference signal 34 is 32 MHz. The threshold values may, for instance, be set to twelve (12), eight (8) and three (3). When the sum M lies in the intervals [13, 14], the first bit from the binary counter 35 is chosen to constitute the second clock signal CLK2, which therewith obtains the frequency 32 MHz. When the sum M lies in the interval [9, 12], the second bit from the binary counter 35 is chosen to constitute the second clock signal CLK2, which therewith obtains the frequency 16 MHz. When the sum M lies in the interval [4, 8], the third bit from the binary counter 35 is chosen to constitute the second clock signal CLK2, which therewith obtains the frequency 8 MHz. When the sum M lies in the interval [0, 3], the fourth bit from the binary counter 35 is selected to constitute the second clock signal CLK2, which therewith obtains the frequency 4 MHz.

Power consumption can be further reduced, by arranging for the arbitrator 5 to switch off the second clock signal CLK2 completely when none of the transmitter units 9.1-9.N requests permission to send data (M=0). For instance, the selector 37 may be designed to refrain from selecting any of the bits from the binary counter 35 in response to a command from the control circuit and applies no signal on the output of the selector 37 instead. Alternatively, the arbitrator 5 may be designed to enable the signal generator 33 to be switched off in response to a command from the control circuit 39.

The binary counter 35 forms in combination with the selector 37 a simple and inexpensive type of frequency divider which divides down the frequency of the reference signal 34 by 2ⁿ (n=0,1,2,3). Alternatively, the arbitrator 5 may include, instead, a more advanced type of frequency divider for frequency modification of the reference signal 34. Naturally, a frequency multiplier may be used in a similar way instead, such as to modify the frequency of the reference signal 34 in relation to the sum M.

In the case of the Figure 5 embodiment, the frequency of the reference signal 34 corresponds to a maximum frequency of the second clock signal CLK2. The frequency of the reference signal 34 is adapted with respect to a predetermined maximum traffic load in the digital bus system 1, and the receiver 15 and the transmitters 13.1-13.N are respectively adapted so as to handle the receipt of respective transmitted data at the rate indicated by the reference signal 34. However, the frequency of the reference signal 34 may alternatively be set to a higher value than that for which the receiver 15 is intended. A receiving buffer (not shown) of the receiver 15 will then have a size that is adapted with respect to the frequency of the reference signal 34 and a probability distribution as to the lengths of time that data will be sent at the maximum data rate given by the reference signal 34. This enables short data bursts to be sent at a rate which exceeds the rate at which data can be sent on the data bus 3 over a long time period.

So that data sent over the data bus 3 will not be lost, the control circuit 39 is designed to select suitable time points at which the frequency of the second clock signal CLK2 is changed. In the example shown in Figure 5, the control circuit 39 is designed to receive the first clock signal CLK1, the frame synchronising signal FS and the CTS signal for correctly selecting said suitable time points. In this regard, it is preferred that the control circuit 39 is designed to change the frequency of the second clock signal CLK2 in between the transmission of data by two of said transmitter units 9.1-9.N over the data bus 3.

Alternatively, it is possible, however, to change the frequency of the second clock signal CLK2 while sending data over the data bus 3. In this case, the control circuit 39 is designed to ensure that the change of frequency from an original frequency to a new frequency is glitch-free, in other words to ensure that the frequency will not temporarily exceed either the original frequency or the new frequency during said frequency change.

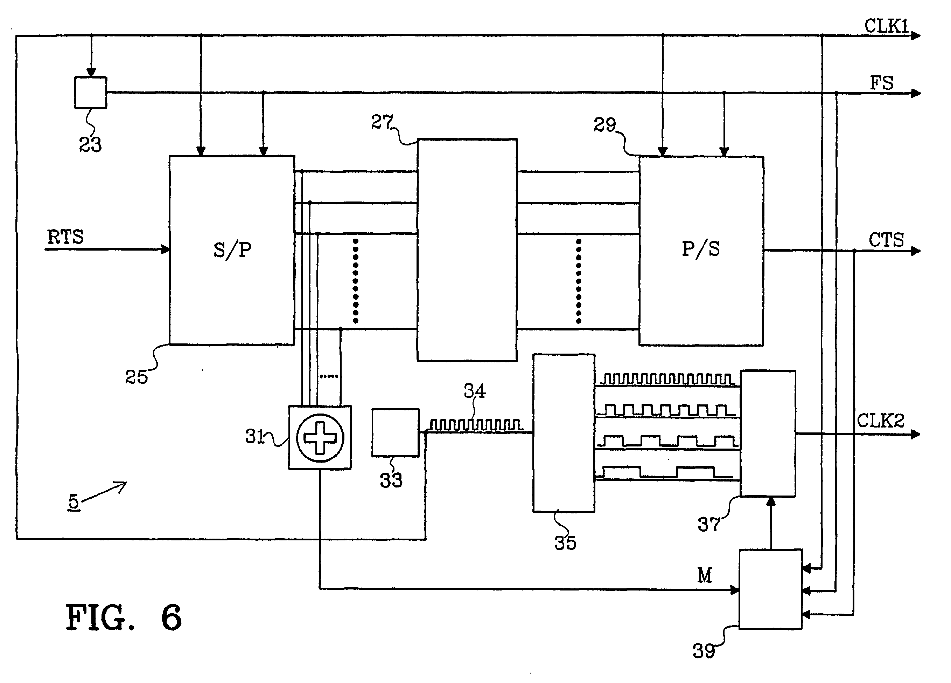

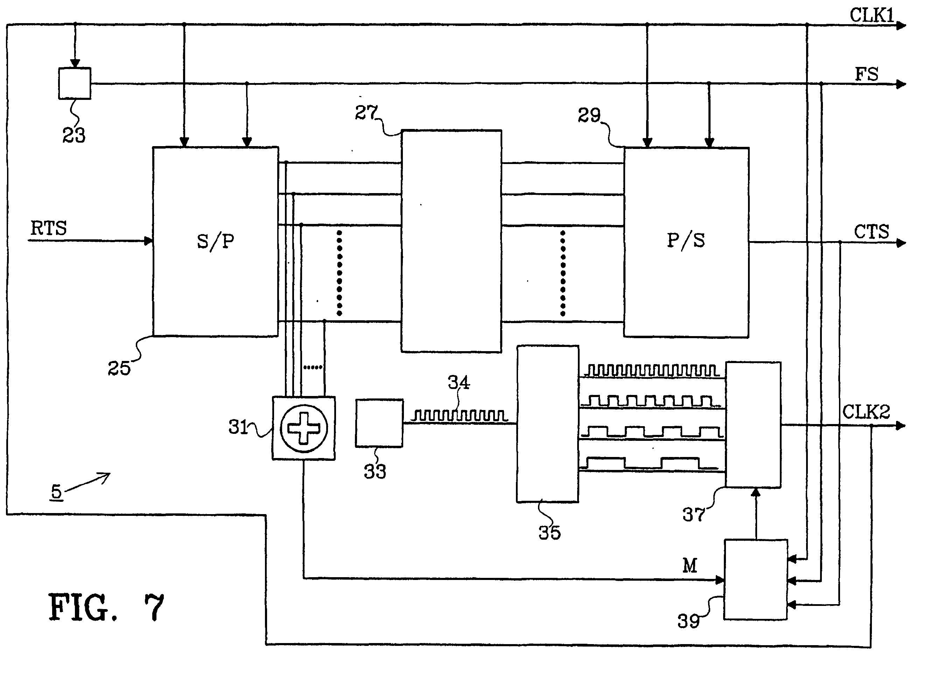

Figures 6 and 7 are block diagrams that illustrate variations of the embodiment of the arbitrator 5 shown in Figure 5. In the Figure 6 variation, the reference signal 34 is also used as the first clock signal CLK1, therewith enabling the exclusion of the clock signal generator 21. In the Figure 7 variation, the second clock signal CLK2 is also used as the first clock signal CLK1, meaning that the clock signal generator 21 can be excluded and the power consumption in the bus system 1 further reduced. The embodiments illustrated in Figures 6 and 7 are the same as the embodiment in Figure 5 in other respects.

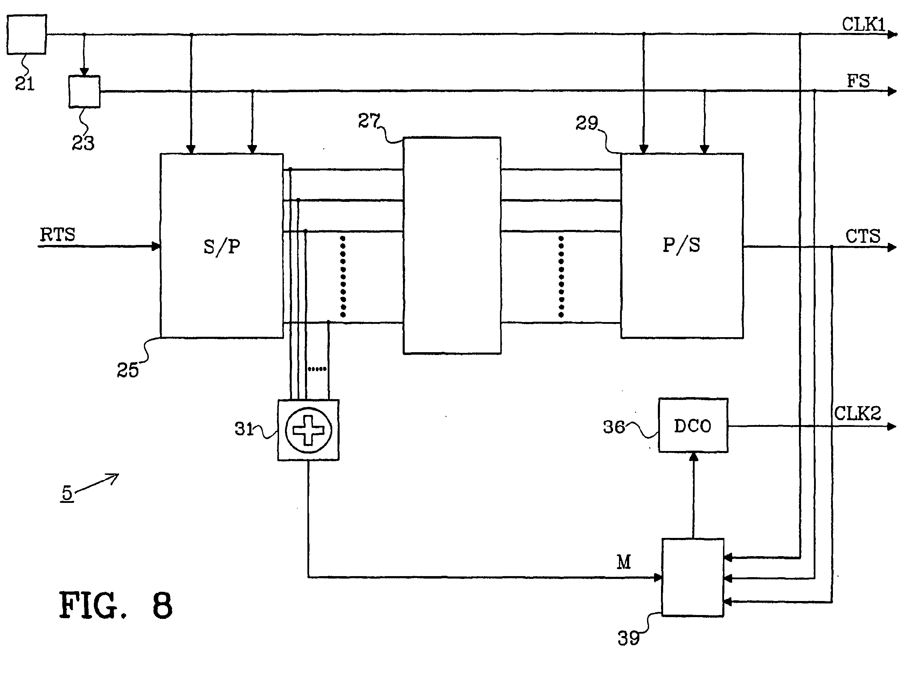

Figure 8 is a block diagram illustrating an alternative embodiment of the arbitrator 5. The embodiment shown in Figure 8 has significant similarities with the embodiment shown in Figure 5, and hence only the differences between the two embodiments will be described in more detail. The embodiment shown in Figure 8 differs from the embodiment shown in Figure 5 by virtue of the arbitrator 5 in Figure 8 including a digitally controlled oscillator (DCO) 36 to generate the second clock signal CLK2. The oscillator 36 is connected to the control circuit 39, which is adapted to control the oscillator 36 in relation to the value of the sum M, which denotes the number of transmitter units 9.1-9.N that have requested permission to send data over the data bus 3. The control circuit 39 is adapted to control the oscillator 36 so that the frequency of the second clock signal CLK2 will depend on the sum M in a manner such that the frequency f of the second clock signal CLK2 will decrease as the sum M decreases. In other words, if M1 and M2 signify two different values of the sum M and f(M1) and f(M2) signify the corresponding frequencies, then f(M2) ≤ f(M1) will apply when M2 < M1. The frequency of the second clock signal CLK2 can be varied by the oscillator 36 in relation to the sum M in a finer way than is possible with the arbitrator 5 of the Figure 5 embodiment. In principle, the frequency of the second clock signal CLK2 can be given a unique value for each value (M=0,1,2,...,N) of the sum M. In turn, this enables the frequency of the second clock signal CLK2 to be changed at the same time as data is sent over the data bus 3, without the risk of data being lost. For example, data can be sent continuously over the data bus 3, therewith leading to more effective utilisation of communications resources in the digital bus system 1. The frequency of the second clock signal CLK2 may, of course, be varied in relation to the sum M in different ways. For instance, the frequency of the second clock signal CLK2 may be varied linearly in dependence of the sum M.

In an alternative embodiment of the arbitrator 5 shown in Figure 8, the second clock signal CLK2 may also be used as the first clock signal CLK1, in a similar manner to that described in Figure 7. This means that the clock signal generator 21 can be excluded from Figure 8, and that power consumption can be further reduced.

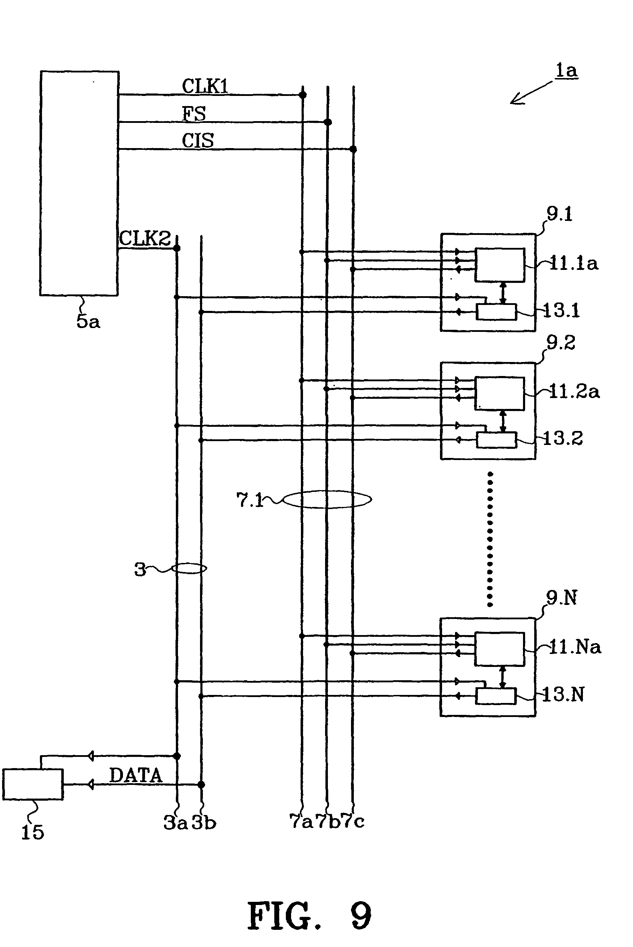

Figure 9 is a block diagram illustrating another exemplifying embodiment of an inventive digital bus system referenced 1a. Many features of the bus system construction illustrated in Figure 9 are the same as in the bus system 1 illustrated in Figure 1. However, the bus system 1a differs from the bus system 1 insofar as it does not include an arbitration function. Instead, the transmitters 13.1-13.N in the transmitter units 9.1-9.N are equipped with circuits (not shown) for detecting collisions on the data bus 3. If one of the transmitters 9.1-9.N attempts to send data over the data line 3b of the data bus 3 and detects a collision, the transmitter waits for a randomly selected time period before making a fresh attempt to send data. The bus system 1a includes a clock unit 5a, which is adapted to generate a second clock signal CLK2, which is laid out on the clock signal line 3a and which indicates a rate at which data is sent over the data bus 3. The frequency of the second clock signal CLK2 is based on how often collisions occur on the data bus 3. To enable collision information to be fetched from the transmitter units 9.1-9.N, the digital bus system 1a includes an information bus 7.1 that has three signal lines 7a, 7b and 7c. The information bus 7.1 interlinks the clock unit 5a with slaves 11.1a-11.Na in the transmitter units 9.1-9.N. The clock unit 5a is adapted to generate a first clock signal CLK1 and a frame synchronising signal FS, these signals being applied on respective signal lines 7a and 7b. When the transmitters 13.1-13.N have detected collisions on the data bus 3, they send information concerning these collisions to the slaves 11.1a-11.Na, which, in turn, send information concerning collisions that have occurred to the clock unit with the aid of a collision indicator signal (CIS). The clock unit 5a is adapted to receive the CIS signal via the signal line 7c. The frame structure of the CIS signal is similar to the frame structure of the, e.g., RTS signal in the bus system 1. The CIS signal is synchronised with the aid of the first clock signal CLK1 and the frame synchronising signal FS. The frames of the CIS signal include information as to whether the transmitters have been subjected to a collision in the latest attempt to send data over the data bus 3. An information bit in the form of a one (1) in the frames indicates that the corresponding transmitter was subjected to a collision in its latest attempt to send data over the data bus 3, while an information bit in the form of a zero (0) in the frame correspondingly indicates that no collision occurred in the latest attempt to send data.

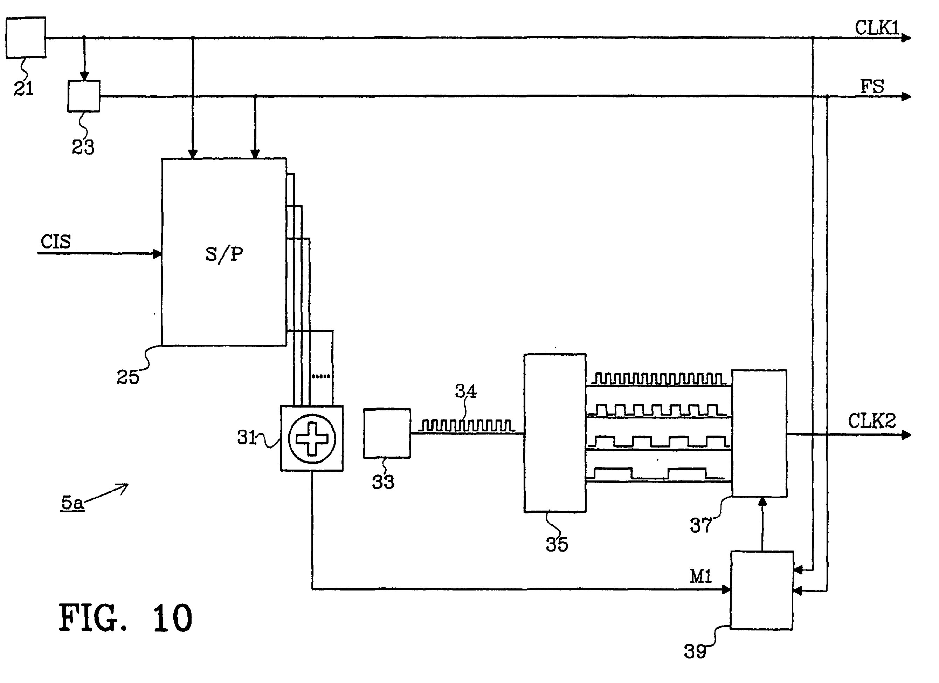

Figure 10 is a block diagram of an exemplifying embodiment of the clock unit 5a. The construction of the clock unit 5a in Figure 10 corresponds essentially to the arbitrator 5 in Figure 5. However, because the bus system 1a does not include an arbitrator function, the clock unit 5a in Figure 10 will neither include the line manager 27 nor the P/S converter 29. Moreover, the S/P converter 25 is adapted to receive the CIS signal instead of the RTS signal. Thus, the adder 31, which is connected to the outputs of the S/P converter 25, is adapted to generate a sum M1 by adding together the information bits in the frames of the CIS signal. The sum M1 therefore corresponds to the number of transmitter units 9.1-9.N that have newly detected collisions in attempting to send data over the data bus 3. The more collisions that have been detected, the more transmitters 13.1-13.N that attempt to send data over the data bus 3. The sum M1 thus gives an indirect indication of the number of transmitter units that need to send data over the data bus 3. The control circuit 39 is adapted to control the frequency of the second clock signal CLK2 in relation to the sum M1 in a similar manner as the frequency of the second clock signal CLK2 of the Figure 5 embodiment is varied in relation to the sum M. The embodiment of the clock unit 5a in Figure 10 can be varied in different ways. For example, the reference signal 34 or the second clock signal CLK2 can be used as the first clock signal CLK1 in a similar way as in the embodiments of the arbitrator 5 in Figures 6 and 7.

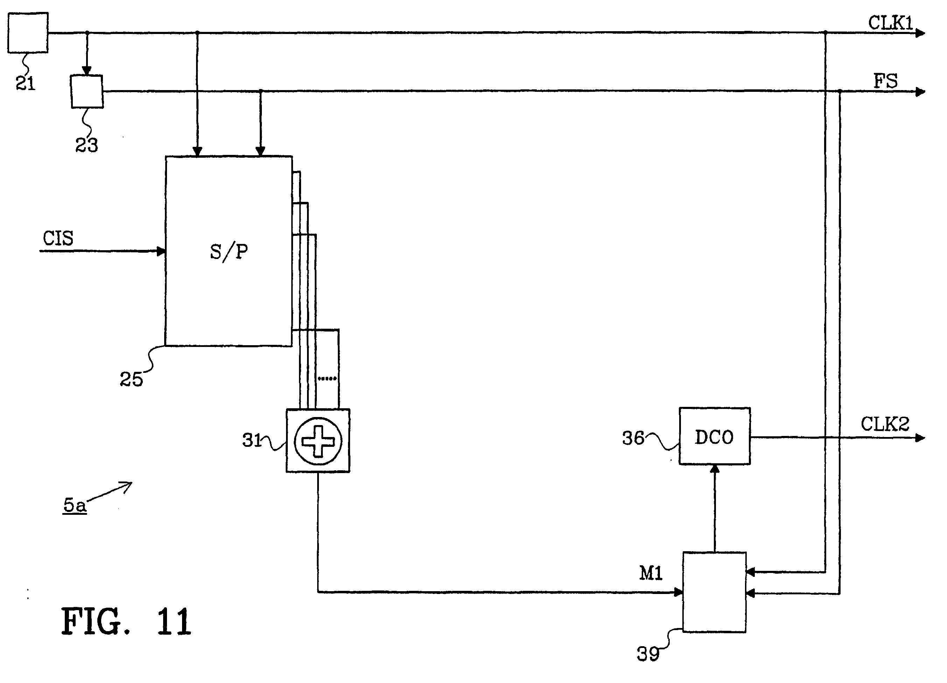

Figure 11 is a block diagram illustrating a further exemplifying embodiment of the clock unit 5a. The construction of the clock unit 5a in Figure 11 corresponds essentially to the arbitrator 5 in Figure 8. However, because the bus system 1 a does not include an arbitrator function, the clock unit 5a in Figure 11 does not include the line manager 27 or the P/S converter 29. Moreover, the S/P converter 25 is adapted to receive the CIS signal instead of the RTS signal. The adder 31, which is connected to the outputs of the S/P converter 25, is thus adapted to generate a sum M1 by adding together the information bits in the frames of the CIS signal. The sum M1 thus corresponds to the number of transmitter units 9.1-9.N that have newly detected collisions when attempting to send data over the data bus 3. The more collisions that are detected, the more transmitters 13.1-13.N that have attempted to send data over the data bus 3. The sum M1 thus indicates indirectly how many of the transmitter units need to send data over the data bus 3. The control circuit 39 is adapted to control the frequency of the second clock signal CLK2 in relation to the sum M1, in a similar manner as the frequency of the second clock signal CLK2 in the Figure 8 embodiment is varied in relation to the sum M. The embodiment of the clock unit 5a in Figure 11 can be varied in different ways. For example, the second clock signal CLK2 can be used as the first clock signal CLK1 in a similar manner as in the embodiments of the arbitrator 5 shown in Figure 7.

Normally, the digital bus systems 1 and 1a are constructed for a given number (N) of transmitter units 9.1-9.N and the performance of the bus systems 1 and 1a is adapted to handle this number. However, the manner in which the second clock signal CLK2 is generated in accordance with the invention causes the digital bus systems 1 and 1a to function effectively even when the bus systems 1 and 1a include a smaller number of transmitter units instead (say N-K). The digital bus systems 1 and 1a are thus more flexible, since they can be used beneficially with different numbers of transmitter units.

The embodiments of the arbitrator 5 shown in Figures 5 to 8 inclusive, and the embodiments of the clock unit 5a in Figures 10 and 11, can be constructed with different circuit technologies. For example, there can be used programmable circuits, such as FPGA circuits (Field Programmable Gate Array). Alternatively, there may be used instead ASIC circuits (Application-Specific Integrated Circuit), or ASIC circuits in combination with programmable circuits.

It will be understood that all technical applications considered appropriate by the person skilled in this art may be used. The invention is particularly beneficial with respect to technical applications in which a large number of transmitter units are used, for instance in data and telecommunications applications. The invention can also be applied beneficially with mobile equipment without an external power supply, with which there is, of course, a need to keep down power consumption.

## Claims

1. A digital bus system (1; 1a) comprising:
at least one first data bus (3) that includes at least one data line (3b);
a plurality of transmitter units (9.1-9.N) that are connected to the first data bus;
at least one receiver (15) that is connected to the first data bus;
means (5; 5a) for generating a clock signal (CLK2) which indicates the rate at which data is sent on the first data bus; and
means (3 a) for distributing the clock signal to the transmitter units, **characterised in that** the bus system includes means (25, 31) for establishing at least one first parameter (M; M1) that indicates the number of transmitter units which have a need to send data over said first data bus; and **in that**
said clock signal generating means are adapted to generate the clock signal in relation to at least the first parameter in accordance with a predetermined pattern, so that the data rate on the first data bus will decrease in response to a reduction in the number of transmitter units that need to send data over the first data bus.

2. A digital bus system (1; 1a) according to Claim 1, wherein the means (5; 5a) for generating the clock signal (CLK2) include:
means (33) for generating a reference signal (34) that has a predetermined frequency;
frequency modifying means adapted to receive the reference signal and to generate the clock signal by frequency modifying said reference signal; and
control means (39) for controlling said frequency modification in relation to the first parameter (M; M1).

3. A digital bus system (1; 1a) according to Claim 2, wherein the frequency modifying means include a controllable frequency divider.

4. A digital bus system according to Claim 3, wherein the frequency divider includes:
a binary counter (35) that has a predetermined number of bits, said binary counter being adapted to receive the reference signal (34); and
a controllable selector (37), which is connected to the binary counter and adapted to select one of the bits from the counter in response to the control from the control means (39), wherewith the bit selected constitutes the clock signal (CLK2).

5. A digital bus system (1; 1a) according to Claim 1, wherein the means for generating the clock signal (CLK2) include a digitally controlled oscillator (37).

6. A digital bus system (1) according to any one of Claims 1 to 5 inclusive, wherein the transmitter units (9.1-9.N) include means (11.1-11.N) for requesting permission to send data over the first data bus (3).

7. A digital bus system (1) according to Claim 6, wherein the bus system further includes means (25, 31) for establishing the number of requesting transmitter units (9.1-9.N), and wherein the means for establishing the first parameter are adapted to establish said first parameter on the basis of the established number of requesting transmitter units.

8. A digital bus system according to any one of Claims 6 or 7, wherein the bus system further includes:
means (27, 29, 7) for determining and controlling the order in which the requesting transmitter units (9.1-9.N) send data over the first data bus (3).

9. A digital bus system (1) according to any one of Claims 7 or 8, wherein the bus system is adapted to switch off the clock signal (CLK2) when the established number of requesting transmitter units (9.1-9.N) is zero.

10. A digital bus system (1a) according to any one of Claims 1 to 5 inclusive, wherein the transmitter units (9.1-9.N) include means for detecting collisions on the first data bus (3).

11. A digital bus system (1a) according to Claim 10, wherein the bus system includes means (13.1a-13.Na, 7.1, 25, 31) for establishing at least a first value (M1) that indicates the collision intensity on the first data bus (3), and wherein the means for establishing the first parameter are adapted to establish said first parameter on the basis of said first value.

12. A digital bus system (1a) according to Claim 11, wherein said first value (M1) corresponds to the number of transmitter units (9.1-9.N) that have newly detected a collision.

## Revendications

1. Système de bus numérique (1; 1a) comprenant:
au moins un premier bus de données (3) qui inclut au moins une ligne de données (3b);
une pluralité d'unités d'émetteur (9.1-9.N) qui sont connectées au premier bus de données;
au moins un récepteur (15) qui est connecté au premier bus de données;
un moyen (5; 5a) pour générer un signal d'horloge (CLK2) qui indique le débit auquel des données sont envoyées sur le premier bus de données; et
un moyen (3 a) pour distribuer le signal d'horloge sur les unités d'émetteur,
**caractérisé en ce que** le système de bus inclut un moyen (25, 31) pour établir au moins un premier paramètre (M; M1) qui indique le nombre d'unités d'émetteur qui ont besoin d'envoyer des données sur ledit premier bus de données; et **en ce que**
ledit moyen de génération de signal d'horloge est adapté pour générer le signal d'horloge en relation avec au moins le premier paramètre conformément à un motif prédéterminé de telle sorte que le débit de données sur le premier bus de données diminue en réponse à une réduction du nombre d'unités d'émetteur qui ont besoin d'envoyer des données sur le premier bus de données.

2. Système de bus numérique (1; 1a) selon la revendication 1, dans lequel le moyen (5; 5a) pour générer le signal d'horloge (CLK2) inclut:
un moyen (33) pour générer un signal de référence (34) qui présente une fréquence prédéterminée;
un moyen de modification de fréquence qui est adapté pour recevoir le signal de référence et pour générer le signal d'horloge en modifiant en termes de fréquence ledit signal de référence; et
un moyen de commande (39) pour commander ladite modification de fréquence en relation avec le premier paramètre (M; M1).

3. Système de bus numérique (1; 1a) selon la revendication 2, dans lequel le moyen de modification de fréquence inclut un diviseur de fréquence commandable.

4. Système de bus numérique selon la revendication 3, dans lequel le diviseur de fréquence inclut:
un compteur binaire (35) qui présente un nombre de bits prédéterminé, ledit compteur binaire étant adapté pour recevoir le signal de référence (34); et
un sélecteur commandable (37) qui est connecté au compteur binaire et qui est adapté pour sélectionner l'un des bit en provenance du compteur en réponse à la commande en provenance du moyen de commande (39), où le bit sélectionné constitue le signal d'horloge (CLK2).

5. Système de bus numérique (1; 1a) selon la revendication 1, dans lequel le moyen pour générer le signal d'horloge (CLK2) inclut un oscillateur commandé numériquement (37).

6. Système de bus numérique (1) selon l'une quelconque des revendications 1 à 5 inclus, dans lequel les unités d'émetteur (9.1-9.N) incluent un moyen (11.1-11.N) pour demander l'autorisation d'envoyer des données sur le premier bus de données (3).

7. Système de bus numérique (1) selon la revendication 6, dans lequel le système de bus inclut en outre un moyen (25, 31) pour établir le nombre d'unités d'émetteur formulatrices de requête (9.1-9.N) et dans lequel le moyen pour établir le premier paramètre est adapté pour établir ledit premier paramètre sur la base du nombre établi d'unités d'émetteur formulatrices de requête.

8. Système de bus numérique selon l'une quelconque des revendications 6 ou 7, dans lequel le système de bus inclut en outre:
un moyen (27, 29, 7) pour déterminer et commander l'ordre selon lequel les unités d'émetteur formulatrices de requête (9.1-9.N) envoient des données sur le premier bus de données (3).

9. Système de bus numérique (1) selon l'une quelconque des revendications 7 ou 8, dans lequel le système de bus est adapté pour désactiver le signal d'horloge (CLK2) lorsque le nombre établi d'unités d'émetteur formulatrices de requête (9.1-9.N) vaut zéro.

10. Système de bus numérique (1a) selon l'une quelconque des revendications 1 à 5 inclus, dans lequel les unités d'émetteur (9.1-9.N) incluent un moyen pour détecter des collisions sur le premier bus de données (3).

11. Système de bus numérique (1a) selon la revendication 10, dans lequel le système de bus inclut un moyen (13.1a-13.Na, 7.1, 25, 31) pour établir au moins une première valeur (M1) qui indique l'intensité de collision sur le premier bus de données (3) et dans lequel le moyen pour établir le premier paramètre est adapté pour établir ledit premier paramètre sur la base de ladite première valeur.

12. Système de bus numérique (1a) selon la revendication 11, dans lequel ladite première valeur (M1) correspond au nombre d'unités d'émetteur (9.1-9.N) qui ont nouvellement détecté une collision.

## Patentansprüche

1. Digitales Bussystem (1; 1a) mit:
mindestens einem ersten Datenbus (3), der mindestens eine Datenleitung (3b) aufweist;
einer Vielzahl von Sendereinheiten (9.1-9.N), die mit dem ersten Datenbus verbunden sind;
mindestens einem Empfänger (15), der mit dem ersten Datenbus verbunden ist;
einer Einrichtung (5; 5a) zum Erzeugen eines Taktsignals (CLK2), das die Rate anzeigt, mit der Daten auf dem ersten Datenbus gesendet werden; und
einer Einrichtung (3a) zum Verteilen des Taktsignals an die Sendereinheiten, **dadurch gekennzeichnet, daß** das Bussystem Einrichtungen (25, 31) zum Feststellen mindestens eines ersten Parameters (M; M1) aufweist, der die Anzahl der Sendereinheiten anzeigt, die Bedarf haben, Daten über den ersten Datenbus zu senden; und daß
die Taktsignalerzeugungseinrichtung geeignet ist, das Taktsignal in Relation zu mindestens dem ersten Parameter entsprechend einem vorbestimmten Muster zu erzeugen, so daß sich die Datenrate auf dem ersten Datenbus als Antwort auf eine Reduzierung der Anzahl der Sendereinheiten, die Bedarf haben, Daten über den ersten Datenbus zu senden, verringert.

2. Digitales Bussystem (1; 1a) nach Anspruch 1, wobei die Einrichtung (5; 5a) zur Erzeugung des Taktsignals (CLK2) aufweist:
eine Einrichtung (33) zum Erzeugen eines Referenzsignals (34), das eine vorbestimmte Frequenz hat;
eine Frequenzmodifikationseinrichtung, die geeignet ist, das Referenzsignal zu empfangen und das Taktsignal durch Frequenzmodifikation des Referenzsignals zu erzeugen; und
eine Steuereinrichtung (39) zum Steuern der Frequenzmodifikation in Relation zu dem ersten Parameter (M; M1).

3. Digitales Bussystem (1; 1a) nach Anspruch 2, wobei die Frequenzmodifikationseinrichtung einen steuerbaren Frequenzteiler aufweist.

4. Digitales Bussystem nach Anspruch 3, wobei der Frequenzteiler aufweist:
einen Binärzähler (35), der eine vorbestimmte Anzahl von Bits hat, wobei der Binärzähler geeignet ist, das Referenzsignal (34) zu empfangen; und
einen steuerbaren Selektor (37), der mit dem Binärzähler verbunden und geeignet ist, eines der Bits aus dem Zähler als Antwort auf die Steuerung ausgehend von der Steuereinrichtung (39) zu wählen, wobei das gewählte Bit das Taktsignal (CLK2) bildet.

5. Digitales Bussystem (1; 1a) nach Anspruch 1, wobei die Einrichtung zum Erzeugen des Taktsignals (CLK2) einen digital gesteuerten Oszillator (37) aufweist.

6. Digitales Bussystem (1) nach einem der Ansprüche 1 bis einschließlich 5, wobei die Sendereinheiten (9.1-9.N) Einrichtungen (11.1-11.N) zum Anfragen um Erlaubnis, Daten über den ersten Datenbus (3) zu senden, aufweist.

7. Digitales Bussystem (1) nach Anspruch 6, wobei das Bussystem ferner Einrichtungen (25, 31) zum Feststellen der Anzahl von anfragenden Sendereinheiten (9.1-9.N) aufweist und wobei die Einrichtungen zum Feststellen des ersten Parameters geeignet sind, um den ersten Parameter auf der Grundlage der festgestellten Anzahl von anfragenden Sendereinheiten festzustellen.

8. Digitales Bussystem nach einem der Ansprüche 6 oder 7, wobei das Bussystem ferner aufweist:
Einrichtungen (27, 29, 7) zum Bestimmen und Steuern der Reihenfolge, in der die anfragenden Sendereinheiten (9.1-9.N) Daten über den ersten Datenbus (3) senden.

9. Digitales Bussystem (1) nach einem der Ansprüche 7 oder 8, wobei das Bussystem geeignet ist, das Taktsignal (CLK2) auszuschalten, wenn die festgestellte Anzahl der anfragenden Sendereinheiten (9.1-9.N) null ist.

10. Digitales Bussystem (1a) nach einem der Ansprüche 1 bis einschließlich 5, wobei die Sendereinheiten (9.1-9.N) eine Einrichtung zum Erkennen von Kollisionen auf dem ersten Datenbus (3) aufweisen.

11. Digitales Bussystem (1a) nach Anspruch 10, wobei das Bussystem Einrichtungen (13.1a-13.Na, 7.1, 25, 31) zum Feststellen mindestens eines ersten Wertes (M1) aufweist, der die Kollisionsintensität auf dem ersten Datenbus (3) anzeigt, und wobei die Einrichtung zum Feststellen des ersten Parameters geeignet ist, den ersten Parameter auf der Grundlage des ersten Wertes festzustellen.

12. Digitales Bussystem (1a) nach Anspruch 11, wobei der erste Wert (M1) der Anzahl von Sendereinheiten (9.1-9.N) entspricht, die eine Kollision neu erkannt haben.
